# EUROPEAN PATENT APPLICATION

(11) **EP 1 950 652 A1**
(43) Date of publication of application: **30.07.2008**
(21) Application number: 08001512.6
(22) Date of filing: 28.01.2008
(51) Int. Cl.: G06F 3/048

(54) **Method and apparatus for choosing ranges from a multi-range slider**

(30) Priority: 26.01.2007 US 698157
(71) Applicant: Mapinfo Corporation, Troy, NY 12180 (US)
(72) Inventor: Berrill, Arthur R., Goodwood Ontario (CA); Li, Xiang, North York Ontario M2M 4M1 (CA)
(74) Representative: HOFFMANN EITLE

(57) **Abstract**

A multi-range slider (200) that simplifies the process for a user to pick multiple value ranges for various applications and saves a user's display area by providing multiple value selectors arranged in a single, possibly non-linear scale. The multi-range slider has the ability to display massive amounts of data and information in an easily viewable, condensed and manageable format in the context of a larger display area such that the slider does not obscure or clutter the user interface. The multi-range slider allows the user to select ranged values as well as single values. The multi-range slider provides multiple range selectors (203, 204) for the user to pick multiple ranges. The scale of the multi-range slider may be linear or non-linear.

## Description

The invention relates generally to software user interfaces and more particularly to a user interface for choosing and displaying ranges of a multi-range slider having values to enhance detail while minimizing the display area used on the user interface.

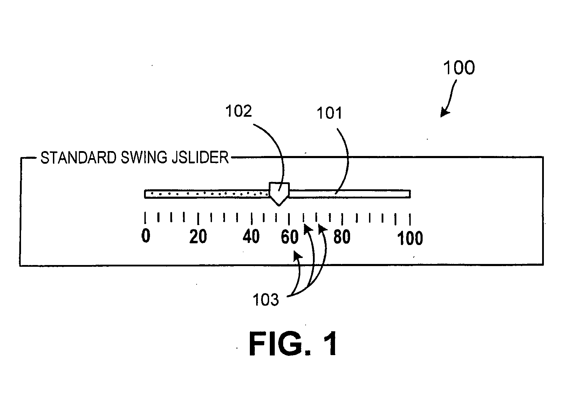

In the computer graphical user interface world, a typical slider 100, shown in FIG. 1, is used to solicit the user to pick a value from an illustrated range. The typical slider 100 usually contains a scale 101 where the user is usually confined to a maximum and minimum range of values in which to pick a value. A slider handle 102, or thumb, sits on the scale 101 to show the currently picked value. The user typically uses a mouse, keyboard or other pointing device (not shown) to move the handle 102 along the scale 101 and the slider component responds by calculating new values corresponding to the position of the handle 102.

This traditional slider 100, however, is restricted in its functionality. First of all, the slider 100 only allows one value to be picked at any given time. If more values need to be picked, even from the same range, multiple sliders have to be created, causing more precious user interface display area to be occupied. Secondly, the slider scale 101 is linear. When the user employs the ticks 103 to guide value picking, the accuracy at all ranges is the same (ticks 103 represent each value or periodic amount graphically along the slider 100). In some cases it might be important for certain values within a given range to be more or less accurate (i.e., more or less precision for certain ticks 103). For example, the user may desire to select a value between the range of 0 and 100, but would rather view the values between 40 and 50 with more precision. In other words, displaying the preferred tick values within a certain range to the 3rd or 4th decimal places, while displaying the remaining values to the 0 or 1st decimal places. In order to accomplish this using the typical slider 100 with a linear model, the entire slider 100 would have to be made larger to reach the required accuracy. As a result, other ranges become unnecessarily large and show an unnecessary accuracy. More critically, the display area is wasted in these ranges.

There is a need for a slider for a user interface that allows for the display of information, including but not limited to ranges of values, without the loss of detail within desired ranges, yet without unduly using up a substantial portion of the display area on the user interface.

The present invention provides for a multi-range slider that simplifies the process for picking multiple value ranges for various applications while saving space on a user's display area by providing multiple value selectors arranged in a single, possibly non-linear scale. The multi-range slider has the ability to display massive amounts of data and information in an easily viewable, condensed and manageable format in the context of a larger display area such that the slider does not obscure or clutter the user interface. The multi-range slider allows the user to select ranged values as well as single values. The multi-range slider provides multiple range selectors for the user to pick multiple ranges. The scale of the multi-range slider may be linear or non-linear.

It is an object of the invention to provide a method of displaying information comprising inputting multi-range of values, inputting a second range of values, and displaying the inputted first and second range of values using a multi-range slider.

It is a further object of the invention to provide a multi-range slider comprising means for picking a first range of values, means for picking a second range of values, and means for displaying the picked first and second range of values on the multi-range slider.

It is a further object of the invention to provide a multi-range slider comprising a first set of coordinates, a second set of coordinates, and a third set of coordinates, wherein the first set of coordinates are first mapped to the second set of coordinates, which are mapped to a third set of coordinates.

It is a further object of the invention to provide a system comprising a processor coupled to a multi-range slider having means for picking a first range of values, means for picking a second range of values, and means for displaying the picked first and second range of values on the multi-range slider.

The foregoing and other advantages and features of the invention will become more apparent from the detailed description of exemplary embodiments provided below with reference to the accompanying drawings in which:

FIG. 1 is an illustration of a typical slider;

FIG. 2 is an illustration of an exemplary embodiment of the invention;

FIG. 3 is an illustration of another embodiment of the invention;

FIG. 4 is an illustration of another embodiment of the invention;

FIG. 5 is an illustration of another embodiment of the invention;

FIG. 6 is an illustration of another embodiment of the invention; and

FIG. 7 is a processor system including an embodiment of the invention.

A multi-range slider is a graphical user interface (GUI) component that allows users to pick multiple value ranges from a linear or non linear scale. The purpose of the multi-range slider is to simplify the process for a user to pick multiple value ranges for various applications and to save the user's display area by providing multiple value selectors arranged in a single, possibly non-linear scale. The user uses sliding handles to define value ranges on a scale that is not necessarily linear. The ability to handle non-linear domains allows some important value ranges to be shown in detail while other ranges of less importance can be shown with lower definition. Value ranges may or may not overlap. If overlapping is disabled, the boundaries of the handles do not cross each other, and the value ranges do not overlap. The multi-range slider, described herein, may be used to display any type of information such as text data, graphics, video, etc. The multi-range slider has the ability to display large amounts of data and information in an easily viewable, condensed and manageable format in the context of a larger display such that it does not obscure or clutter the user interface.

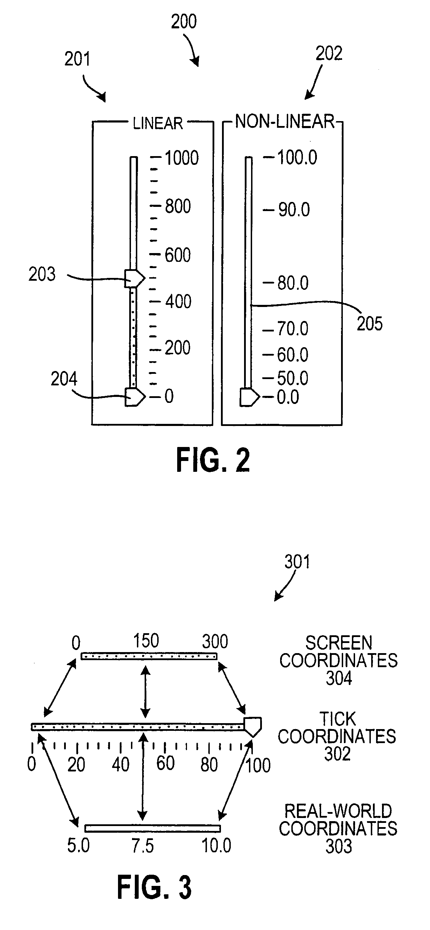

Referring to FIG. 2, two multi-range sliders 201, 202 that allow the user to select ranges of values as well as single values. FIG. 2 illustrates a comparison of a linear and non-linear model multi-range slider. The sliders 201, 202 provide multiple range selectors 203, 204 for the user to pick at least one range. The scale model can be linear 201 as well as non-linear 202. The scale 205 of multi-range slider 202 is non-linear. A non-linear scale 202 allows some value ranges to be revealed in much greater detail than other ranges.

Examples of this application include a geological time scale, where more recent time ranges are to be displayed in much more detail (e.g., thousands or millions of years ago) and further back time ranges are displayed in a much less detailed manner (e.g., hundreds of millions or billions of years ago).

There are a number of advantages of the multi-range slider compared to the typical slider. The multi-range slider 200 is flexible and provides richer functionality. For example, instead of only allowing the user to select a single value, it allows the user to select a value range. In turn, it is easier for applications that use variants such as time ranges to display information. The multi-range slider 200 allows the user to select multiple value ranges, rather than a single value. Other examples include thematic maps and various statistics tools. The user can select continuous value ranges as well as discrete value sets. The range can be made continuous or discrete depending on the needed application. A continuous slider allows the user to select a continuous range of values while a discrete slider allows the user to select enumerated values from a range. If defined as discrete, the range value handles are snapped to scale ticks and selected ranges include enumerated values.

A multi-range slider can be of any combination of continuous, discrete, linear and non-linear features. For example, a continuous, non-linear model is described by a non-linear mathematical function such as an exponential function. A non-linear discrete model is the most flexible as it uses individual points to fit the non-linear curve. Furthermore, interpolation between discrete points can also be linear or non-linear.

A multi-range slider can be designed to limit the value ranges for each value range handle. A handle's value range can cover the whole scale, or can be limited to just a portion of the scale. In a preferred embodiment, proper configuration comprises each handle covering value ranges that do not overlap each other. It should be appreciated, however, that the value ranges could overlap each other if desired.

Multiple mapping of tick values, referring to FIG. 3, allow easier modeling of various data types such as dates, currency amounts, colors, etc. For example, a three-fold mapping was implemented as multi-range slider 301. The screen coordinates 304 are first mapped to a conceived coordinate system or "tick coordinate" system 302, which is mapped to the real-world coordinate system 303. The tick coordinates 302 are integers, while the real-world coordinates 303 could be any type of value such as integers and dates. A three-folded mapping system makes it easy to use existing tick models that require real-world values to be integers. For example, Java's JSlider uses integers to represent real-world coordinate systems. JSlider handles the conversion between screen coordinates and tick values to real-world values.

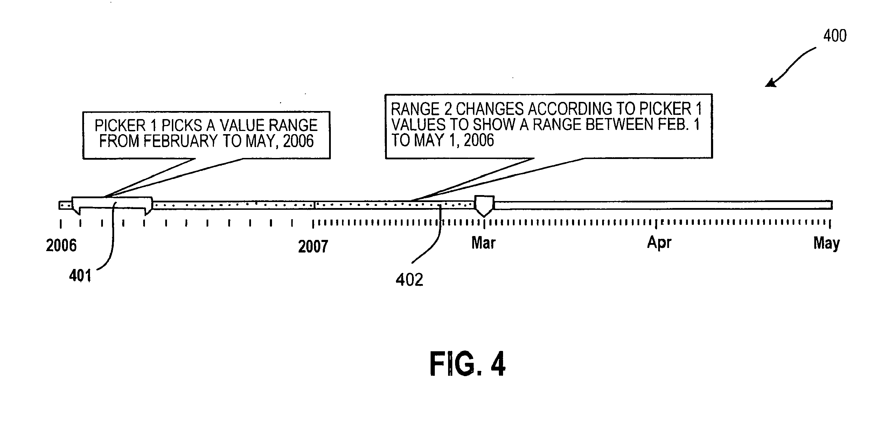

FIG. 4 illustrates an example of a cascaded range slider 400. A range 401 can be configured to be responsive to other value handles so that when a value handle changes the value it picks, a responsive range 402 will change accordingly. For example, if a user uses handle 401 to pick a value range from February to May 2006, handle 402 will change accordingly to the value ranges of handle 401 to show a range between February 1 and May 1, 2006.

The multi-range slider has built-in features that are configurable for its use in various applications. Individual range value handles and ranges, as well as the slider as a whole, can be configured through a user friendly interface. For an individual range value handle, the properties include its size, color, filling pattern, and transparency. For a range, the properties include minimum and maximum values, range scale math model (linear, logarithm, or discrete) definition, color and filling pattern, and tick labels.

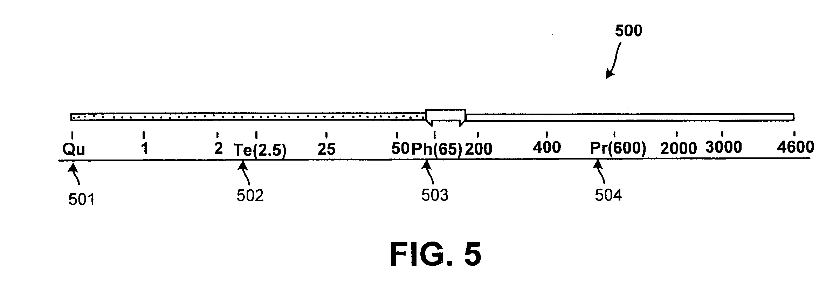

A number of examples will now be described. Referring to FIG. 5, human knowledge of Earth does not evenly distribute over the 4.6 billion years that the Earth has been in existence. A lot more is known about the Cenozoic (Quaternary and Tertiary) period than the periods of Mesozoic (Cretaceous, Jurassic and Triassic), Paleozoic and Precambrian. If an application is to allow the user to choose a period of time to show life evolution over that period, a non-linear range slider 500 should be used. Specifically, FIG. 5 shows a non-linear time slider 500 that covers the Earth's 4.6 billion years of history. The slider 500 scale is divided into several ranges 501, 502, 503, 504, each range being displayed in a different level of detail. For example, Quaternary period 501, which covers a period of 2.5 million years, is shown in more detail than the Precambrian period 504 which covers a period of almost 4 billion years. In sum, FIG. 5 illustrates a non-linear multi-range slider that represents a geological time scale allowing the user to select a time window, e.g., Dinosaur time (around 70 to 144 million years before present), to observe the life evolution on Earth. It should be appreciated that the abbreviations on the drawing refer to the following: Qu - Quarternary, ca. 0-2.5 m.a.; Te - Tertiary, ca. 2.5-65 m.a.; Ph - Phanerozoic, ca. 65-600 m.a.; and Pr - Precambrian, ca. 600-4600 m.a.

As another example, referring back to FIG. 4, financial comparison analyses can be displayed to compare financial results between different fiscal years using a multi-range slider. For example, a company may use a multi-range slider 400 as shown in FIG. 4. The slider is configured to have a month handle (picker 1) 401 and a more detailed day/week handle (picker 2) 402. Handle 401 is used to allow the user to pick a period over several months as the period to compare. Handle 402 is used to allow the user to pick a range of days or weeks to look at the details of various financial indicators. A user has the ability to refer to such information and compare the same periods over different fiscal years. When handle 401 picks a range of values, range 2 responds by adjusting its limit values to show the details of the range picked by handle 402 (as explained above).

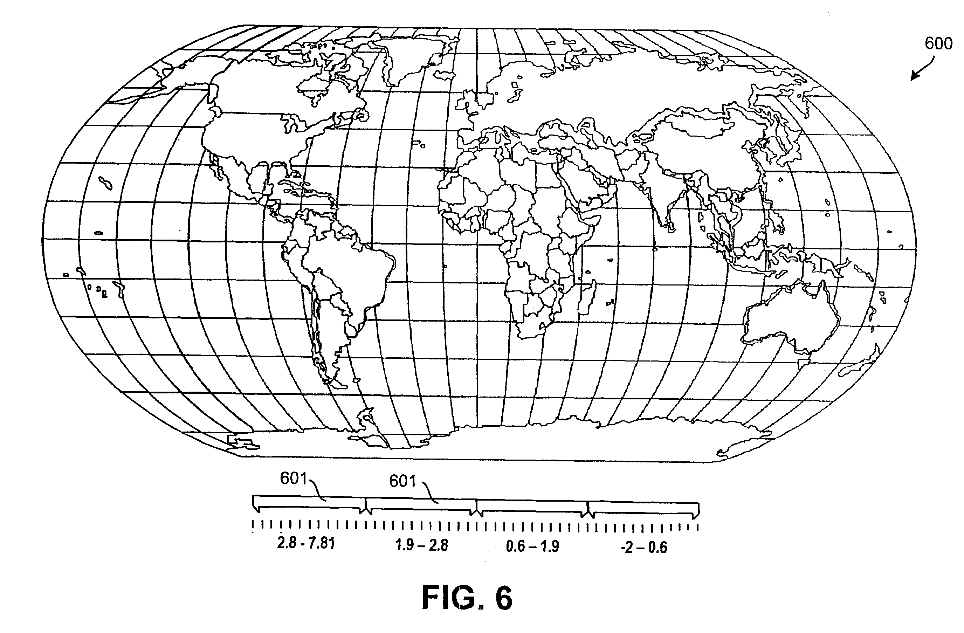

Further, a multi-range slider 600 can be used to define a thematic map and/or a ranged legend, as shown in FIG. 6. The user defines thematic ranges by modifying the various ranges 601 and assigning colors and/or patterns to each range. The user can drag and resize each range 601 and assign colors to each range bar as desired.

Also, a multi-range slider can be used in a scheduler (not shown). The ranged slider can be placed on top of a background matrix, which provides information on availability of each meeting attendant. Whenever the user picks a value range, availabilities of all other attendants are recalculated and shown. If the picked time period fits all attendants' schedule, the handle becomes green. The handle can be dragged to make the period wider or narrower, or it can be moved to cover other periods.

The user refers to the multi-range slider via an input device (not shown), such as a mouse, light pen, keyboard, touchscreen, etc. Representative operation may include displaying an image on the screen in addition to the slider such as a graph or table, compiling a spreadsheet, collecting text, lining up icons, or any other desired application and displaying them on the slider. When the user selects (i.e., refers to) a range of values via the input device, those values are obtained from the system's data source such as, for example, accessing a memory, or activating a communications channel, or downloading data from the internet or other WAN or LAN.

It should be appreciated that there are no specific hardware requirements to use the multi-range slider. Moreover, there are no special requirements for the type of computer or processor needed. The disclosed slider user interface can be implemented on any hardware and/or computer known in the art.

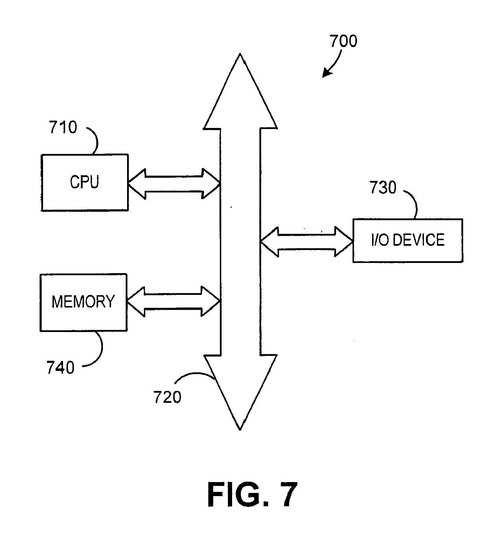

FIG. 7 shows system 700, a processor system modified to include the system for allowing user to pick multiple value ranges from a linear or non linear scale of the present invention. Examples of processor systems, which may employ the system for picking multiple value ranges from a linear or non linear scale include, without limitation, computer systems, machine vision systems, vehicle navigation systems, video telephones, surveillance systems, and others.

System 700 includes a central processing unit (CPU) 710 that communicates with various other devices over a bus 720. Some of the devices connected to the bus 720 provide communication into and out of the system 700, illustratively including an input/output (I/O) device 730 and system for picking multiple value ranges from a linear or non linear scale. Other devices connected to the bus 720 provide memory 470. While one input/output device 730 is shown, there may be multiple I/O devices such as a CD-ROM, hard drive, floppy disk, display, and keyboard as well as others. The system for picking multiple value ranges from a linear or non linear scale may also be combined with a processor, such as memory, digital signal processor, or microprocessor, in a single integrated circuit.

Additionally, the multi-range slider may be a software program stored on a computer readable storage medium (e.g., ROM) and executed by the processor. The stored information can be stored on a floppy disk, CD-ROM, ROM, RAM, HDD or any other suitable medium. It should also be appreciated that the slider is computer programmable by the user and/or other party as well as can be part of an internet browser.

Having described specific preferred embodiments of the invention with reference to the accompanying drawings, it is to be understood that the invention is not limited to those precise embodiments, and that various changes and modifications may be effected therein by one skilled in the art without departing from the scope or the spirit of the invention as defined in the appended claims.

Although the invention has been described in relation to a number of examples, in no way do those examples limit the invention. The invention can be applied to any system, industry or field that deals with user interfaces. The invention can be applied to any analysis system relating to scales of values, ranges and selection of ranges to form displayed data. It should also be appreciated that the manner in which the data and/or selection of ranges is obtained, or the type of equipment used to obtain the data and/or selection of ranges is also not limited to the above described examples.

## Claims

1. A method of displaying information comprising:
inputting a first range of values;
inputting a second range of values; and
displaying the inputted first and second range of values using a multi-range slider (203, 204).

2. The method of claim 1, wherein the inputting steps comprise inputting a range of values from a linear scale (201).

3. The method of claim 1, wherein the inputting steps comprise inputting a range of values from a non-linear scale (202).

4. The method of any preceding claim, further comprising moving a first handle (401) along a scale to input the first range of values in response to a user input.

5. The method of claim 4, further comprising moving a second handle (402) along the scale to input the second range of values in response to a user input.

6. The method of any preceding claim, wherein the inputting steps comprise picking a single value.

7. The method of any preceding claim, wherein the inputting steps comprise picking a continuous range of values.

8. The method of any preceding claim, wherein the inputting steps comprise picking an enumerated value from the range of values.

9. The method of any preceding claim, wherein the inputting steps comprise picking value ranges that do not overlap each other.

10. The method of any preceding claim, wherein when the first inputting step selects a first given range of values, the second inputting step selects a second given range in response to the first given range of values.
